# EUROPÄISCHE PATENTANMELDUNG

(11) **EP 1 120 937 A2**
(43) Veröffentlichungstag der Anmeldung: **01.08.2001**
(21) Anmeldenummer: 01101208.5
(22) Anmeldetag: 18.01.2001
(51) Int. Cl.: H04L 12/28, H04M 11/00

(54) **Kommunikation-Installationssystem**

(30) Priorität: 27.01.2000 DE 10003316
(71) Anmelder: ABB PATENT GmbH, 68309 Mannheim (DE)
(72) Erfinder: Rosch, Rainer, Dr., 58513 Lüdenscheid (DE); Zapp, Robert, 58579 Schalksmühle (DE)
(74) Vertreter: Miller, Toivo

(57) **Zusammenfassung**

Es wird ein Kommunikation-Installationssystem mit einer Basis-Kommunikationseinheit
(1) vorgeschlagen, an welche sternförmig mehrere Raum-Kommunikationseinheiten (2, 3, 4) über jeweils eine Kommunikationsleitung angeschlossen sind,
   - wobei die Basis-Kommunikationseinheit (1) einerseits mehrere Eingänge für eine eingangsseitige AudioNideo-Einspeisung (5), Telefon-Einspeisung (6), EDV-Dienste-Einspeisung (7) und Antennen-Einspeisung (8), andererseits mehrere Ein/Ausgänge für den Anschluß mehrerer Raum-Kommunikationseinheiten (2, 3, 4) aufweist,
   - wobei die Einspeisungen in die Kommunikationsleitungen über Koppeleinrichtungen erfolgen,
   - wobei jede Raum-Kommunikationseinheit (2, 3, 4) einerseits über einen Ein/Ausgang für den Anschluß der Basis-Kommunikationseinheit (1), andererseits über einen AudioNideo-Anschluß (12), Telefon-Anschluß (13), einen Anschluß eines lokalen Netzes (14) und/oder einen Anschluß eines Gebäudetechnik-System-Netzes (15) verfügt.

## Beschreibung

Die Erfindung bezieht sich auf ein Kommunikation-Installationssystem.

Auf dem Gebiet der Hausinstallationstechnik ist es üblich, Ton/Bildübertragungen (Audio/Video, "Kabelanschluß", "Kabelfernsehen") und Antennensignale (terrestrische Antennen oder Parabol-Antennen) über Koaxialleitungen zu übertragen. Für das Telefon wird eine separate TP-Leitung (**T**wisted **P**air = verdrilltes Adernpaar, Leitung mit verdrillten Adern) mit einem Adernpaar oder zwei Adernpaaren benötigt. Die Steuerung elektrischer Verbraucher (wie beispielsweise Jalousien) wird entweder mit eigenen Steuerleitungen oder mit Hilfe von unterschiedlichen Bussystemen, wie TP-Bussystemen (Bussystem, das über eine TP-Leitung kommuniziert), PL-Bussystemen (**P**ower **L**ine = 230 V-Leitung; Bussystem, das über eine PL-Leitung kommuniziert), Bussystemen auf Basis von Funksignalen oder Bussystemen auf Basis von Infrarot-Signalen durchgeführt. Mehr und mehr kommt es auch im privaten Bereich (SOHO = **S**mall **O**ffice/**H**ome **O**ffice = Klein- und Heimbüro) zu PC-Vernetzungen unter Einsatz von TP- oder Koaxialleitungen. Alle vorstehend angeführten Kommunikationsdienste werden nachfolgend auch kurz als "Dienste" bezeichnet.

Die Installation von eigenständigen Leitungsnetzen mit Leitungen sehr unterschiedlicher Natur für jede der vorstehend erwähnte Anwendung in einem Gebäude, einem Haus oder einer Wohnung ist nicht nur sehr aufwendig, insbesondere montageaufwendig und damit kostenaufwendig, sondern hat den Nachteil, daß überwiegend Punkt-zu-Punkt-Verbindungen oder Punkt-zu-Multipunkt-Verbindungen installiert werden. Hierdurch steht nicht in jedem Raum eines Gebäudes, eines Hauses oder einer Wohnung auch jeder Dienst (Audio/Video, Telefon, Steuerleitungs-Anschluß, Anschluß des Bussystems, lokaler Netzanschluß) zur Verfügung. Auch ist eine Kommunikation zwischen den einzelnen Räumen nicht möglich.

Der Erfindung liegt die Aufgabe zugrunde, ein kostengünstiges und einfach aufgebautes Kommunikation-Installationssystem anzugeben.

Diese Aufgabe wird erfindungsgemäß gelöst durch ein Kommunikation-Installationssystem mit einer Basis-Kommunikationseinheit, an welche sternförmig mehrere Raum-Kommunikationseinheiten über jeweils eine Kommunikationsleitung angeschlossen sind,
- wobei die Basis-Kommunikationseinheit einerseits mehrere Eingänge für eine eingangsseitige Audio/Video-Einspeisung, Telefon-Einspeisung, EDV-Dienste-Einspeisung und Antennen-Einspeisung, andererseits mehrere Ein/Ausgänge für den Anschluß mehrerer Raum-Kommunikationseinheiten aufweist,
- wobei die Einspeisungen in die Kommunikationsleitungen über Koppeleinrichtungen erfolgen,
- wobei jede Raum-Kommunikationseinheit einerseits über einen Ein/Ausgang für den Anschluß der Basis-Kommunikationseinheit, andererseits über einen Audio/Video-Anschluß, Telefon-Anschluß, einen Anschluß eines lokalen Netzes und/oder einen Anschluß eines Gebäudetechnik-System-Netzes verfügt.

Die mit der Erfindung erzielbaren Vorteile bestehen insbesondere darin, daß beim vorgeschlagenen Kommunikation-Installationssystem alle Dienste über eine Kommunikationsleitung, vorzugsweise Lichtwellenleiter, übertragen werden. In jedem Raum eines Gebäudes, eines Hauses oder einer Wohnung stehen alle Dienste zur Verfügung. Eine Kommunikation zwischen den einzelnen Räumen ist möglich. Insbesondere aufgrund der einfachen Montage ist das Kommunikation-Installationssystem sehr kostengünstig.

Weitere Vorteile sind aus der nachstehenden Beschreibung ersichtlich.

Vorteilhafte Ausgestaltungen der Erfindung sind in den Unteransprüchen gekennzeichnet.

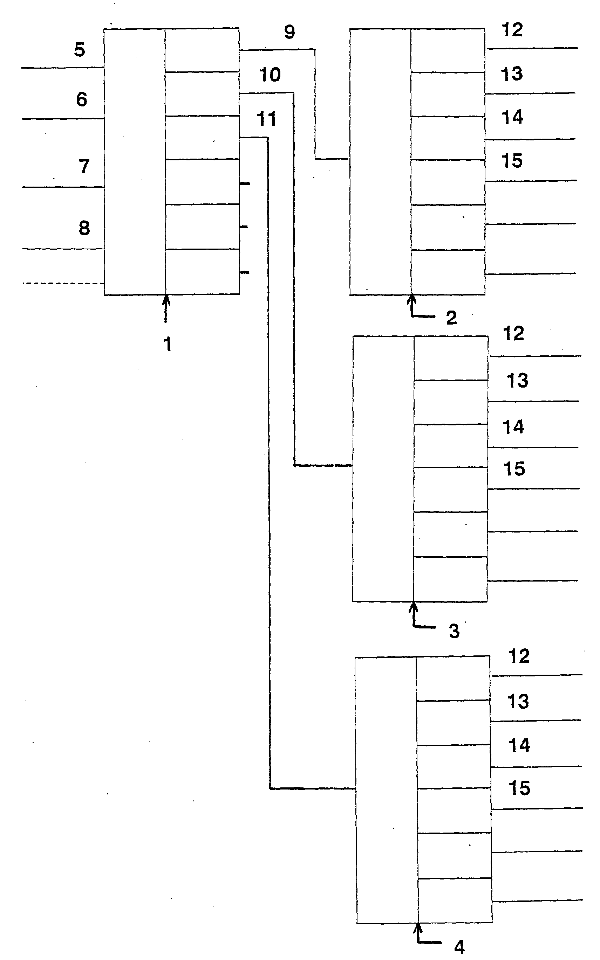

Die Erfindung wird nachstehend anhand des in der Zeichnung dargestellten Ausführungsbeispieles erläutert. In der einzigen Fig. ist das vorgeschlagene Kommunikation-Installationssystem schematisch dargestellt. Das Kommunikation-Installationssystem erfüllt die an einen "Klasse 3 Bus" gestellten Anforderungen und kann demnach universell Bilder, Sprache und Steuersignale übertragen.

Das Kommunikation-Installationssystem besteht aus einer Basis-Kommunikationseinheit 1, an welche mehrere, im Ausführungsbeispiel drei Kommunikationsauslaßeinheiten, sogenannte Raum-Kommunikationseinheiten 2, 3, 4 angeschlossen sind. Die Verbindung zwischen Basis-Kommunikationseinheit 1 und den einzelnen Raum-Kommunikationseinheiten 2, 3, 4 erfolgt über Kommunikationsleitungen, vorzugsweise Lichtwellenleiter 9, 10, 11. Sinnvollerweise ist eine derartige Kommunikationsauslaßeinheit in jedem Raum des Gebäudes, des Hauses oder der Wohnung vorgesehen.

In der Basis-Kommunikationseinheit 1 werden die Informationen, wie TV oder Telefon, angelegt und über entsprechende Koppeleinrichtungen in die Kommunikationsleitungen, vorzugsweise Lichtwellenleiter 9, 10, 11 eingespeist. Im einzelnen weist die Basis-Kommunikationseinheit 1 Anschlüsse, beispielsweise Einsteckplätze, für eine eingangsseitige Audio/Video-Einspeisung 5 ("Kabelfernsehen"), eine Telefon-Einspeisung 6, eine EDV-Dienste-Einspeisung 7 und eine Antennen-Einspeisung 8 (terrestrische Antenne, Parabol-Antenne) auf.

Es können weitere Einsteckplätze für weitere Einspeisungen vorgesehen sein. Insbesondere ist es zweckmäßig, wenn die Basis-Kommunikationseinheit (1) einen Einsteckplatz für ein eine gebäudeinterne bzw. hausinterne bzw. wohnungsinterne Telefonanlage beinhaltendes Modul aufweist (TK = Telekommunikation, Telekommunikationsanlage, hausinterne Telefonanlage). Es ist nicht erforderlich, daß alle Anschlüsse bzw. Einsteckplätze der Basis-Kommunikationseinheit 1 belegt sind, sondern es sind je nach gewünschter Komplexität des Kommunikation-Installationssystems Varianten mit unterschiedlich belegten Anschlüssen/Einsteckplätzen realisierbar.

Für die Steuerung, insbesondere für zeitprogrammierbare Abläufe besitzt die Basis-Kommunikationseinheit 1 ein entsprechendes Controller-Verhalten und vorzugsweise eine per Funksignale gesteuerte Uhr (Funkuhr).

Auf der anderen Seite weist die Basis-Kommunikationseinheit 1 mehrere Ein/Ausgänge für den Anschluß der Raum-Kommunikationseinheiten 2, 3, 4 auf. Diese Ein/Ausgänge können modular zugesteckt werden, um für unterschiedliche Gebäude-, Haus- oder Wohnungsgrößen flexibel zu sein.

Vorzugsweise ist in jedem Raum des Gebäudes, des Hauses oder der Wohnung eine Auslaßeinheit vorgesehen, die über eine zugeordnete Kommunikationsleitung, vorzugsweise Lichtwellenleiter mit der Basis-Kommunikationseinheit 1 verbunden ist. Diese in den Räumen bzw. an den Kommunikationspunkten vorgesehenen Raum-Kommunikationseinheiten 2, 3, 4 (Schnittstellen zum Raum) weisen einen modularen Aufbau für den Anschluß der unterschiedlichen Endgeräte auf. Bei Bedarf sind zum Anschluß der Endgeräte die Module in die entsprechend vorbereiteten Steckplätze einzustecken.

Jede der Raum-Kommunikationseinheiten 2, 3, 4 verfügt über einen Audio/Video-Anschluß 12 (A/V = **A**udio/**V**ideo, alle Geräte für Rundfunk und Fernsehen, einschließlich Videorecorder und Satellitenempfänger), einen Telefon-Anschluß 13 (ISDN oder analog), einen Anschluß eines lokalen Netzes 14, beispielsweise eines PC-Datennetzes und/oder einen Anschluß eines GST-Netzes 15 (GST = **G**ebäude**s**ystem**t**echnik, über ein Bussystem miteinander vernetzte Geräte in Gebäude/Haus/Wohnung zum Schalten elektrischer Verbraucher, wie Licht, Heizung, Jalousie, beispielsweise EIB).

Es können weitere Anschlüsse vorgesehen sein. Alle Anschlüsse erfolgen vorzugsweise jeweils über geeignete Steckplätze der Raum-Kommunikationseinheiten 2, 3, 4. Es ist nicht erforderlich, daß bei einer Anwendung alle Steckplätze der Raum-Kommunikationseinheiten 2, 3, 4 belegt sind, sondern es sind anwendungsspezifisch Varianten mit unterschiedlich belegten Steckplätzen realisierbar.

Bei allen Diensten, beispielsweise PC-Vernetzung (lokales Netz) oder internes Telefonnetz, ist vorteilhaft eine Kommunikation zwischen den einzelnen Räumen des Gebäudes, des Hauses oder der Wohnung über die Raum-Kommunikationseinheiten 2, 3, 4 möglich, wobei die erforderlichen Verbindungen über die Basis-Kommunikationseinheit 1 hergestellt werden.

## Patentansprüche

1. Kommunikation-Installationssystem mit einer Basis-Kommunikationseinheit (1), an welche sternförmig mehrere Raum-Kommunikationseinheiten (2, 3, 4) über jeweils eine Kommunikationsleitung angeschlossen sind,
- wobei die Basis-Kommunikationseinheit (1) einerseits mehrere Eingänge für eine eingangsseitige AudioNideo-Einspeisung (5), Telefon-Einspeisung (6), EDV-Dienste-Einspeisung (7) und Antennen-Einspeisung (8), andererseits mehrere Ein/Ausgänge für den Anschluß mehrerer Raum-Kommunikationseinheiten (2, 3, 4) aufweist,
- wobei die Einspeisungen in die Kommunikationsleitungen über Koppeleinrichtungen erfolgen,
- wobei jede Raum-Kommunikationseinheit (2, 3, 4) einerseits über einen Ein/Ausgang für den Anschluß der Basis-Kommunikationseinheit (1), andererseits über einen AudioNideo-Anschluß (12), Telefon-Anschluß (13), einen Anschluß eines lokalen Netzes (14) und/oder einen Anschluß eines Gebäudetechnik-System-Netzes (15) verfügt.

2. Kommunikation-lnstallationssystem nach Anspruch 1, dadurch gekennzeichnet, daß die Basis-Kommunikationseinheit (1) einen Einsteckplatz für ein eine gebäudeinterne bzw. hausinterne bzw. wohnungsinterne Telefonanlage beinhaltendes Modul aufweist.

3. Kommunikation-Installationssystem nach Anspruch 1 und/oder 2, dadurch gekennzeichnet, daß der Anschluß der unterschiedlichen Endgeräten an die Ein/Ausgänge der Raum-Kommunikationseinheiten (2, 3, 4) jeweils über einsteckbare Module erfolgt.

4. Kommunikation-Installationssystem nach einem der vorstehenden Ansprüche, dadurch gekennzeichnet, daß weitere Ein/Ausgänge der Basis-Kommunikationseinheit (1) für den Anschluß weiterer Raum-Kommunikationseinheiten (2, 3, 4) modular zusteckbar sind.

5. Kommunikation-Installationssystem nach einem der vorstehenden Ansprüche, dadurch gekennzeichnet, daß als Kommunikationsleitungen Lichtwellenleiter (9, 10, 11) eingesetzt sind.

6. Kommunikation-Installationssystem nach einem der vorstehenden Ansprüche, dadurch gekennzeichnet, daß die Basis-Kommunikationseinheit (1) ein für zeitprogrammierbare Abläufe geeignetes Controller-Verhalten aufweist und vorzugsweise mit einer Funkuhr versehen ist.
